(19) Europäisches Patentamt
European Patent Office
Office européen des brevets

(11) **EP 2 026 393 A1**

(12) # EUROPEAN PATENT APPLICATION

(43) Date of publication:
**18.02.2009 Bulletin 2009/08**

(51) Int Cl.:
***H01M 8/02*** (2006.01)

(21) Application number: **08014091.6**

(22) Date of filing: **06.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.08.2007 JP 2007210726**
**11.06.2008 JP 2008152614**

(71) Applicant: **Nissan Motor Co., Ltd.**
**Kanagawa 221-0023 (JP)**

(72) Inventors:
• **Terasaki, Takayuki**
**Atsugi-shi**
**Kanagawa 243-0123 (JP)**
• **Ikezoe, Keigo**
**Atsugi-shi**
**Kanagawa 243-0123 (JP)**

(74) Representative: **Görz, Ingo**
**Hoefer & Partner**
**Patentanwälte**
**Pilgersheimer Strasse 20**
**81543 München (DE)**

(54) **Fuel cell separator and fuel cell**

(57)    A separator (5, 6) for a fuel cell (1) comprises a gas passage (16-20, 36-40) facing an electrode (3, 4). The gas passage (16-20, 36-40) comprises a rapid expansion which enlarges a width of the gas passage (16-20, 36-40) in a step-like fashion from an upstream side to a downstream side with respect to a flow of gas.

The gas passage (16-20, 36-40) upstream of the rapid expansion is thereby made narrow which prevents dryout of the fuel cell (1) while the rapid expansion enhances a moisture bead sweeping force of the gas flow which prevents flooding from occurring in the gas passage (16-20, 36-40) downstream of the rapid expansion.

FIG. 3

**Description**

FIELD OF THE INVENTION

This invention relates to a configuration of a gas passage formed in a separator for a fuel cell.

BACKGROUND OF THE INVENTION

JP2004-079245A published by the Japan Patent Office in 2004 discloses construction of a separator which can reduce the generation of water vapor from electrodes in order to prevent flooding from occurring in a fuel cell.
The fuel cell according to this prior art comprises a separator facing an anode and a separator facing a cathode. A plurality of ribs contacting the anode and gas passages separated by the ribs are formed in a separator surface facing the anode. A plurality of ribs contacting the cathode and gas passages separated by the ribs are formed in a separator surface facing the cathode.
The gas passages in the separator facing the anode are supplied with fuel gas. The gas passages in the separator facing the cathode are supplied with oxidant gas. Water vapor is generated as a result of an electro-chemical reaction of the fuel gas and oxidant gas in the fuel cell. This water vapor, when condensed, adheres to the ribs in the form of moisture beads.
The separators are cooled by a coolant and cool the electrodes via the ribs. When a contact surface between the ribs and the electrode is larger, the electrode exhibits a greater cooling effect. Cooling of the electrode causes a greater amount of water vapor to condense such that a larger amount of moisture beads is formed in the gas passages. As a result, so-called flooding may occur in a downstream portion of the gas passage.
The prior art fuel cell is arranged to prevent the excessive generation of moisture beads by gradually reducing the width of the ribs towards the downstream side so as to reduce the contact surface between the ribs and the electrode.

SUMMARY OF THE INVENTION

In this prior art fuel cell, since the width of the ribs decreases gradually towards the downstream side, the width of the gas passages increases gradually towards the downstream side, and hence the flow velocity of the gas decreases towards the downstream side. A decrease in the flow velocity of the gas weakens a pushing force applied to the moisture beads. The prior art fuel cell is therefore not effective in view of sweeping away moisture beads formed in the gas passages.
It is therefore an object of this invention to enhance a moisture bead sweeping force of a gas flow in a gas passage while preserving a function for preventing the excessive generation of moisture beads.
In order to achieve the above object, this invention provides a separator for a fuel cell, comprising a gas passage facing an electrode of the fuel cell. The gas passage comprises a rapid expansion. The rapid expansion is disposed in the gas passage to enlarge a width of the gas passage in a step-like fashion from an upstream side to a downstream side with respect to a flow of gas in the gas passage.
This invention also provides a fuel cell comprising an ion conducting electrolyte membrane, a pair of electrodes gripping the electrolyte membrane, a pair of separators each of which faces each of the electrodes, and a gas passage that is formed in each separator to face the electrode and comprises a rapid expansion. The rapid expansion is disposed in the gas passage to enlarge a width of the gas passage in a step-like fashion from an upstream side to a downstream side with respect to a flow of gas in the gas passage.
The details as well as other features and advantages of this invention are set forth in the remainder of the specification and are shown in the accompanying drawings.

BRIEF DESCRIPTION OF THE DRAWINGS

FIG. 1 is a cross-sectional view of a polymer electrolyte fuel cell according to this invention.
FIG. 2 is an enlarged exploded cross-sectional view of the fuel cell.
FIG. 3 is a front view of a first separator according to this invention viewed from a cathode side
FIG. 4 is a front view of a second separator according to this invention viewed from an anode side.
FIG. 5 is a diagram illustrating a moisture supply amount, a moisture generation amount, and a water vapor saturation amount in various positions in a gas passage.
FIG. 6 is a diagram illustrating a relation between a width of a rib, a concentration over-voltage, and an oxygen concentration in various positions in the gas passage.
FIG. 7 is a front view of a separator which is used for the preparation of the diagram of FIG. 6.
FIG. 8 is a front view of a first separator according to a second embodiment of this invention viewed from the cathode side.

FIG. 9 is a front view of a first separator according to the second embodiment of this invention viewed from the anode side.

FIG. 10 is a front view of a second separator according to a third embodiment of this invention viewed from the anode side.

FIG. 11 is a front view of a first separator according to a fourth embodiment of this invention when viewed from the anode side.

FIG. 12 is a longitudinal sectional view of the first separator according to the fourth embodiment of this invention taken along a line XII-XII in FIG. 11.

FIG. 13 is similar to FIG. 12 but shows a fifth embodiment of this invention.

DESCRIPTION OF THE PREFERRED EMBODIMENTS

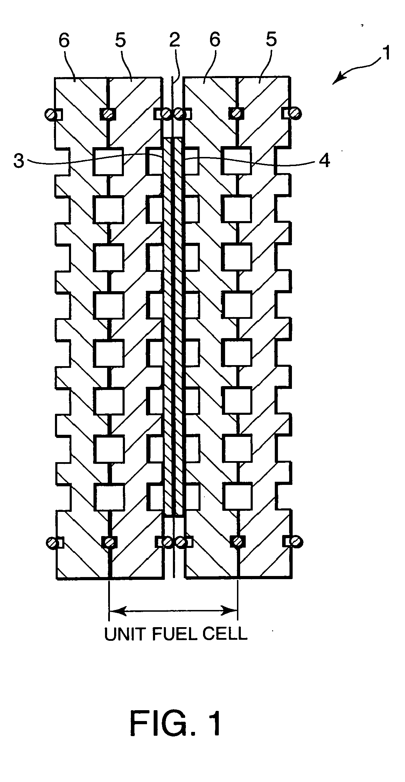

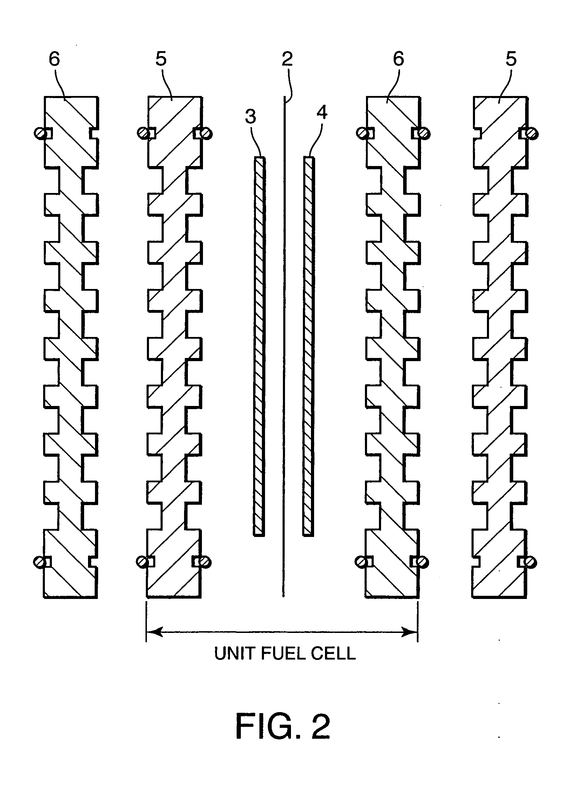

Referring to FIG. 1 and FIG. 2 of the drawings, a polymer electrolyte fuel cell 1 comprises an ultra thin electrolyte membrane 2 as thin as 30 micrometers made of a polymer material, a cathode 3 and an anode 4 as thick as 300 micrometers, which are stacked on both sides of the polymer electrolyte membrane 2. The cathode 3 and the anode 4 respectively comprise a catalyst layer and a gas diffusion layer formed on the outside of the catalyst layer with respect to a stacking direction.

A first separator 5 of about one millimeter thickness is stacked on the cathode 3 from the outside with respect to the stacking direction. A second separator 6 of about one millimeter thickness is stacked on the anode 4 from the outside with respect to the stacking direction. A unit polymer electrolyte fuel cell 1 therefore comprises a stacked body of the polymer electrolyte membrane 2, the cathode 3, the anode 4, the first separator 5, and the second separator 6. Further, a number of the polymer electrolyte fuel cells 1 are stacked to form a fuel cell stack for operation.

Gas passages 16-20 in the form of grooves are formed in the first separator 5 to supply the cathode 3 with an oxidant gas. Gas passages 36-40 in the form of grooves are formed in the second separator 6 to supply the anode 4 with a fuel gas.

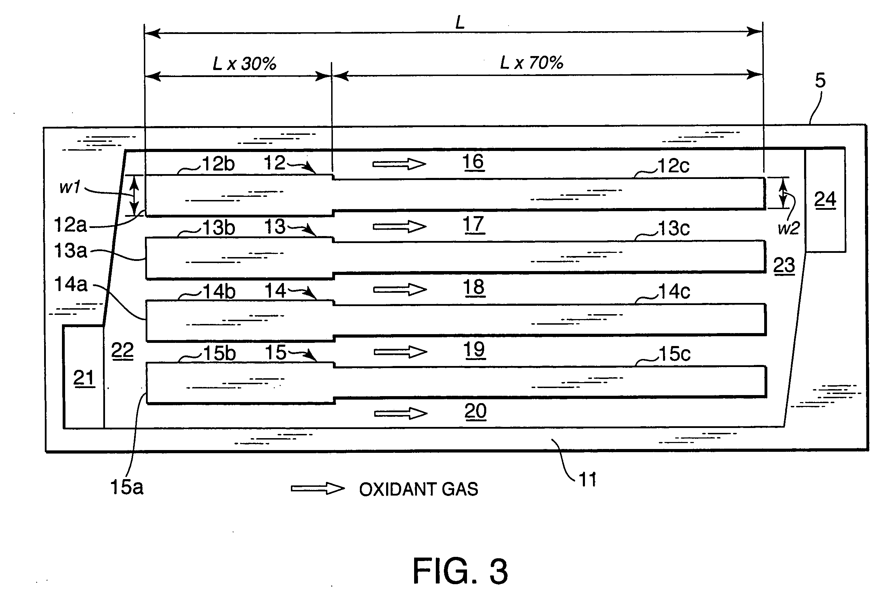

Referring to FIG. 3, the first separator 5 is constituted by a rectangular plate formed from carbon and resin or metal. The gas passages 16-20 formed in the first separator 5 promote a flow of oxidant gas in a direction from the left hand side to the right hand side of the figure. The gas passages 16-20 are separated by a rim 11 of the first separator 5 and four ribs 12-15 formed in the first separator 5 in a longitudinal direction. In an assembled state of the fuel cell 1, the rim 11 and the ribs 12-15 come into contact with the cathode 3.

In the following description, 30 percent of an entire length $L$ of the ribs 12-15 on the upstream side with respect to the flow of oxidant gas is named as a first region and the ribs 12-15 in the first region are named as ribs 12b-15b. 70 percent of the whole length $L$ of the ribs 12-15 on the downstream side with respect to the flow of oxidant gas is named as a second region and the ribs 12-15 in the second region are named as ribs 12c-15c.

A width $w1$ of the ribs 12b-15b in the first region is set to be greater than a width $w2$ of the ribs 12c-15c in the second region. As a result, a so-called rapid expansion is formed in the gas passage 16-20 between the first region and the second region.

In the first region, the ratio of the width of the gas passages 16-20 with respect to the width $w1$ of the ribs 12b-15b is set at 2:3. In the second region, the ratio of the width of the gas passages 16-20 with respect to the width $w2$ of the ribs 12c-15c is set at 1:1.

One reason why the width $w1$ of the ribs 12b-15b in the first region is set to be greater than the width $w2$ of the ribs 12c-15c in the second region is for prevention of a so called dry-out phenomenon in the first region.

Moisture is generated in the catalyst layer of the cathode 3 by an electro-chemical reaction between the fuel gas and the oxidant gas. The moisture generated in the catalyst layer of the cathode 3 either evaporates and forms water vapor or infiltrates the cathode 3, the electrolyte membrane 2, and the anode 4 in liquid form. In a stable reaction state of the fuel cell 1, a moisture content of the electrolyte membrane 2 balances at a constant level, and hence all the generated moisture evaporates. The evaporation amount of moisture per unit area of the cathode 3 increases as the moisture content of the electrolyte membrane 2 increases. The evaporation amount of moisture from the cathode 3 increases as the disposed area of the cathode 3 to the gas passages 16-20 increases.

In a stable reaction sate of the fuel cell 1, therefore, the moisture content of the cathode 3 for maintaining a fixed evaporation amount therefrom increases as the disposed surface area of the cathode 3 to the gas passages 16-20 decreases. In contrast, the moisture content of the cathode 3 for generating the fixed evaporation amount decreases as the disposed surface area of the cathode 3 to the gas passages 16-20 increases. In order to maintain an electro-chemical reaction in the fuel cell 1, the electrolyte membrane 2 must be maintained in a humid state, and dry-out occurs if the moisture content of the electrolyte membrane 2 decreases beyond a certain level.

In the first separator 5, a width $w1$ of the ribs 12b-15b in the first region is set to be greater than a width $w2$ of the ribs 12c-15c in the second region so as to decrease the disposed surface area of the cathode 3 to the gas passages 16-20 for the purpose of increasing the moisture content of the electrolyte membrane 2. With this arrangement, when the moisture content of the supplied oxidant gas is controlled within a range of 40 to 80 percent, the electrolyte membrane 2 maintains a higher moisture content. This arrangement of the width $w1$ of the ribs 12b-15b is therefore preferable in terms of preventing dry-out in the first region.

A supply manifold 21 is formed in a position corresponding to the lower left corner of the first separator 5 in FIG. 3. The five gas passages 16-20 are connected to the supply manifold 21 via a diffuser 22. Oxidant gas is supplied to the supply manifold 21 from outside. The oxidant gas flows into the diffuser 22 from the supply manifold 21 and is distributed to the five gas passages 16-20. The oxidant gas flows down the gas passages 16-20 in a direction indicated by the arrows in the figure.

A discharge manifold 24 is formed in a position corresponding to the upper right corner of the first separator 5 in FIG. 3. The five gas passages 16-20 are connected to the discharge manifold 24 via a collector 23. Unused oxidant gas and water vapor in the gas passages 16-20 are collected by the collector 23 and then discharged through the discharge manifold 24 to the outside of the fuel cell 1.

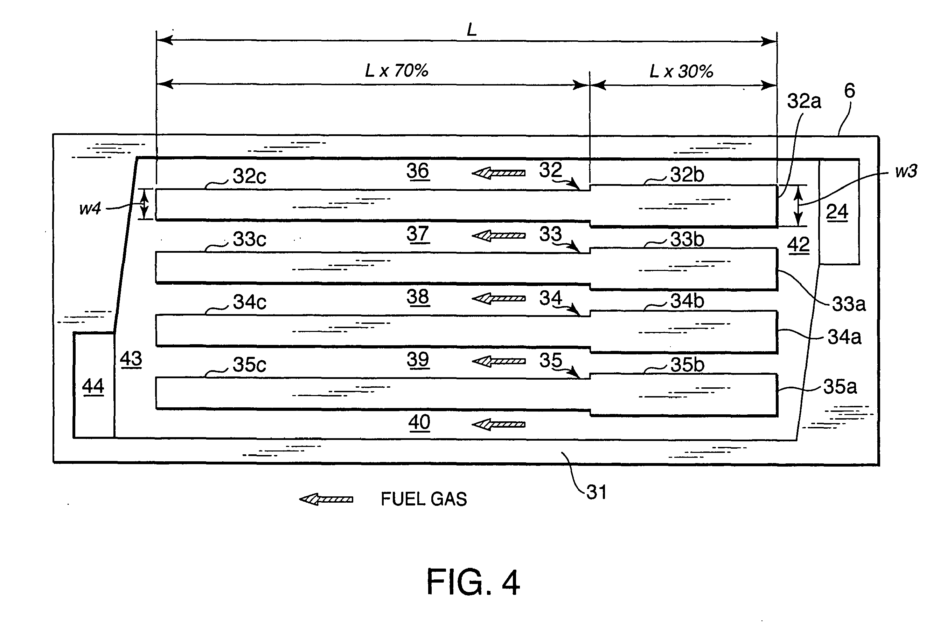

Referring to FIG. 4, the second separator 6 is also constituted by a rectangular plate formed from carbon and resin or metal. The outer shape and size of the second separator 6 are identical to those of the first separator 5. Also, the construction of the second separator 6 is similar to that of the first separator 5. The second separator 6 comprises gas passages 36-40 separated by a rim 31 of the second separator 6 and four ribs 32-35 disposed in the second separator 6 in a longitudinal direction. In an assembled state of the fuel cell 1, the rim 31 and the ribs 32-35 come in contact with the anode 4.

In the following description, 30 percent of an entire length $L$ of the ribs 32-35 on the upstream side with respect to the flow of fuel gas is named as a first region and the ribs 32-35 in the first region are named as ribs 32b-35b. 70 percent of the whole length $L$ of the ribs 32-35 on the downstream side with respect to the flow of fuel gas is named as a second region and the ribs 32-35 in the second region are named as ribs 32c-35c.

A width $w3$ of the ribs 32b-35b in the first region is set to be greater than a width $w4$ of the ribs 32c-35c in the second region. As a result, a so-called rapid expansion is formed in the gas passage 36-40 between the first region and the second region.

In the first region, the ratio of the width of the gas passages 36-40 with respect to the width w3 of the ribs 32b-35b is set at 2:3. In the second region, the ratio of the width of the gas passages 36-40 with respect to the width w4 of the ribs 32c-35c is set at 1:1.

One reason why the width $w3$ of the ribs 32b-35b in the first region is set to be greater than the width w4 of the ribs 32c-35c in the second region is to prevent dry-out in the first region. Although the anode 4 does not generate moisture, the moisture generated by the cathode 3 penetrates the electrolyte membrane 2 to reach the anode 4. If the anode 4 is not in a wet condition, a huge amount of moisture in the electrolyte membrane 2 evaporates through the cathode 4 into the gas passages 36-40 and causes the moisture content of the electrolyte membrane 2 to become excessively low.

By making the width w3 of the ribs 32b-35b in the first region greater than the width $w4$ of the ribs 32c-35c in the second region, the disposed surface area of the anode 4 to the gas passages 36-40 decreases. When the width w3 of the ribs 32b-35b in the first region, which corresponds to an upstream portion of a gas flow, increases, the disposed surface area of the anode 4 to the gas passages 36-40 decreases. When the disposed surface area of the anode 4 to the gas passages 36-40 decreases, the moisture content of the anode 4 for maintaining a fixed evaporation amount therefrom increases. As a result of the setting of the widths w3 and w4 described above, when the moisture content of the supplied fuel gas is controlled within a range of 40 to 80 percent, the electrolyte membrane 2 maintains a higher moisture content.

A supply manifold 41 is formed in a position corresponding to the upper right corner of the second separator 6 in FIG. 4. The five gas passages 36-40 are connected to the supply manifold 41 via a diffuser 42. Fuel gas is supplied to the supply manifold 41 from outside. The fuel gas flows into the diffuser 42 from the supply manifold 41 and is distributed to the five gas passages 36-40. The fuel gas flows down the gas passages 36-40 in a direction indicated by the arrows in the figure.

A discharge manifold 44 is formed in a position corresponding to the lower left corner of the second separator 6 in FIG. 4. The five gas passages 36-40 are connected to the discharge manifold 44 via a collector 43. Unused fuel gas and water vapor in the gas passages 36-40 are collected by the collector 43 and then discharged through the discharge manifold 44 to a processing device provided outside the fuel cell 1.

Oxidant gas flowing in the gas passages 16-20 in the first separator 5 diffuses not only into the portion of the cathode 3 facing the gas passages 16-20 but also into the portion of the cathode 3 which is in contact with the ribs 12-15. Fuel gas flowing in the gas passages 36-40 in the second separator 6 diffuses not only into the portion of the anode 4 facing the gas passages 36-40 but also into the portion of the anode 4 which is in contact with the ribs 32-35. The electrochemical reaction between the fuel gas and the oxidant gas therefore occurs over the entire surface of the electrolyte membrane 2.

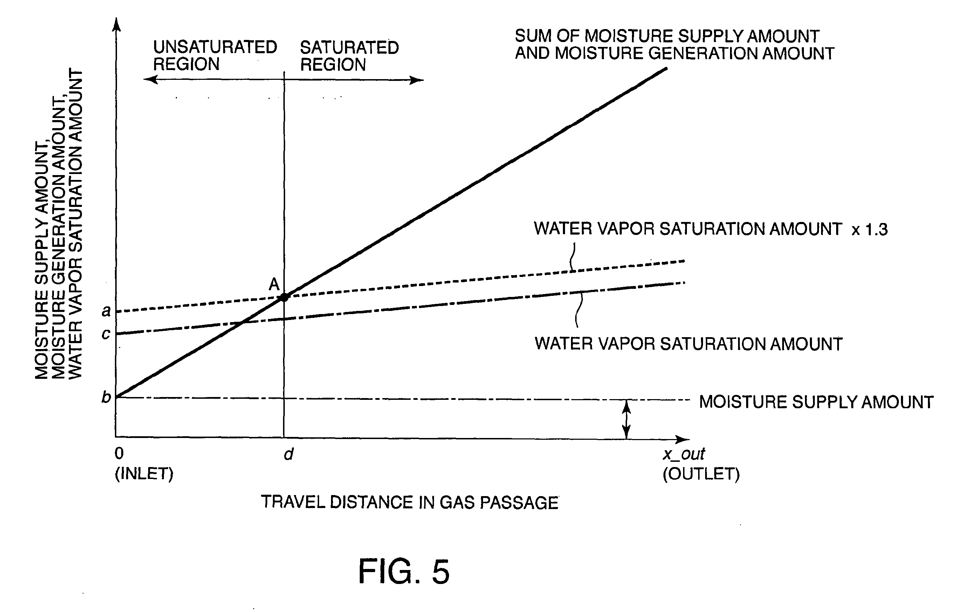

Referring to FIG. 5, the reason why the length of the first region is set equal to 30 percent of the entire length

*L* of the ribs in the first separator 5 as well as the second separator 6 will be described.

In this diagram, an abscissa represents a travel distance in the gas passage. A point of distance zero corresponds to an inlet of the gas passage, and a point of distance *x_out* corresponds to an outlet of the gas passage. The moisture supply amount is a mass of water vapor supplied from outside to a unit fuel cell. The moisture generation amount is a mass of moisture generated in the fuel cell. The water vapor saturation amount is a mass of water vapor when it saturates the gas in the gas passage.

When an electro-chemical reaction occurs in the fuel cell 1, the temperature of the gas flowing in the gas passage increases as it flows down from the inlet towards the outlet. The moisture generation amount due to the electro-chemical reaction in the fuel cell 1 then increases at a higher increase rate towards the downstream side from the inlet. Herein, the moisture supply amount is set equal to a constant amount *b* which is smaller than the water vapor saturation amount *a* at the inlet of the gas passage. The sum of the moisture supply amount and the moisture generation amount forms an upward sloping straight line in FIG. 5.

The fuel cell 1 further comprises a cooling water passage for cooling the fuel cell 1 in addition to the gas passages 16-20 and 36-40. The water vapor saturation amount *a* is calculated on the basis of the cooling water temperature in the cooling water passage. Considering that the electrode where the electro-chemical reaction takes place has a higher temperature than the cooling water, 1.3 times a water vapor saturation amount *c* obtained directly from the cooling water temperature is estimated as the water vapor saturation amount *a* in the gas passage.

Comparing the sum of the moisture supply amount and the moisture generation amount with the water vapor saturation amount based on the above assumption, the sum of the moisture supply amount and the moisture generation amount is smaller than the water vapor saturation amount in a region upstream of a point A at a travel distance *d* while the sum of the moisture supply amount and the moisture generation amount is greater than the water vapor saturation amount in a region downstream of the point A. Accordingly, the portion of the gas passage located upstream of the point A is named as an unsaturated region and the portion of the gas passage located downstream of the point A is named as a saturated region.

Dry-out, in which the fuel cell 1 suffers from a shortage of moisture required for the electro-chemical reaction, occurs in the unsaturated region. As described hereintofore, even when the humidity of the supplied gas is controlled within a range of 40 to 80 percent, by narrowing the width of the gas passage in the unsaturated region, the electrolyte membrane 2 maintains a higher moisture content such that no dry-out occurs.

Providing that the characteristic shown in FIG. 5 corresponds to the characteristic when the fuel cell 1 is under a standard power generation load in a standard atmospheric condition, the real characteristic varies according to the power generation load and/or atmospheric pressure. Even when the moisture supply amount is kept constant, the moisture generation amount varies according to these conditions, and hence the location of the point A shifts. Herein, the prevention of dry-out is planned to cover a case in which the location of the point A is shifted to right side to the maximum extent, or in other words a case in which the unsaturated region is largest.

The inventors obtained a result through matching whereby dry-out is prevented properly as long as the first region is set equal to about thirty percent of the entire length L of the ribs 12-15 and 32-35.

The calculation method for the moisture supply amount, the moisture generation amount, and the water vapor saturation amount, which are used for the calculation described above will now be described.

The moisture supply amount is a mass of water vapor supplied to one unit fuel cell 1 and calculated by multiplying a mass of dry gas supplied to one unit fuel cell 1 by a partial pressure of water vapor and then dividing the result by the entire pressure of the gas. Specifically, it is calculated by the equation (1) below.

$$\text{moisture supply amount [mol/sec]} = \text{mass of dry gas [mol/sec]} \times$$

$$\text{partial pressure of water vapor [kPa]} / \text{entire pressure [kPa]} \qquad (1)$$

The moisture generation amount is a mass of water generated by the electro-chemical reaction in one unit fuel cell 1 and calculated by dividing the load current by a Faraday constant and then dividing the result by two. Specifically, it is calculated by the equation (2) below.

$$\text{moisture generation amount [mol/sec] = (load current [C/sec] /}$$

$$\text{Faraday constant [C/mol]) / 2} \qquad \qquad (2)$$

where, C = coulomb.

The water vapor saturation amount is a mass of saturated water vapor in the gas passage and calculated from a cooling water temperature in the vicinity of the supply manifold 21 of the first separator 5 as a representative temperature of the fuel cell 1. In further detail, it is calculated by the equation (3) below based on the specification of the fuel cell 1 and the atmospheric condition. It should be noted that each mass is represented by a value per second.

$$\text{mass of saturated water vapor in the gas passage [mol/sec] = mass of}$$

$$\text{supplied dry gas [mol/sec] x partial pressure of saturated water vapor in the}$$

$$\text{supply manifold 21 [kPa] / entire pressure [kPa]} \qquad (3)$$

The value 2 in the right-hand term of the equation (2) denotes an equivalent coefficient between the electric current and the moisture generation amount obtained from the reaction formulae in the anode 4 and the cathode 3. The load current in the right-hand term of the equation (2) is an accumulation amount of the current which flows through the effective reaction surface area of the electrolyte membrane 2 during a period extending from the point where the supplied gas starts from the inlet to the point where the supplied gas reaches a predetermined travel distance in the gas passage.

To increase the power generation efficiency of the fuel cell 1, it is necessary to decrease a resistance which lowers the voltage when a load is exerted, or in other words to decrease an over-voltage. The over-voltage is constituted by a resistance over-voltage and a concentration over-voltage. The former represents a voltage reduction phenomenon caused by the internal resistance of the fuel cell 1. The latter represents a voltage reduction phenomenon caused by prevention of the electrode reaction due to a delay in the supply of reaction material to the electrode or a delay in the removal of generated matter from the electrode by the reaction.

The concentration over-voltage is affected significantly by the width of the ribs 12-15 in the first separator 5. Therefore, when the width $w1$ of the ribs 12b-15b in the first region corresponding to the upstream portion of the gas passages 16-20 in the separator 5 is determined, a balance between the resistance over-voltage and the concentration over-voltage must be considered. In the fuel cell 1, the resistance is substantially constant in comparison with the concentration over-voltage. On the other hand, the concentration over-voltage is determined based on the partial pressure of oxygen in the gas passage and increases exponentially in the downstream portion of the gas passage due to a reduction in the partial pressure of oxygen therein. To prevent a power generation stoppage due to an increase in the concentration over-voltage, the width of the ribs must be designed so as to suppress increases in the concentration over-voltage in the gas passages separated by the ribs 12c-15c in the second region corresponding to the downstream portion of the gas passage.

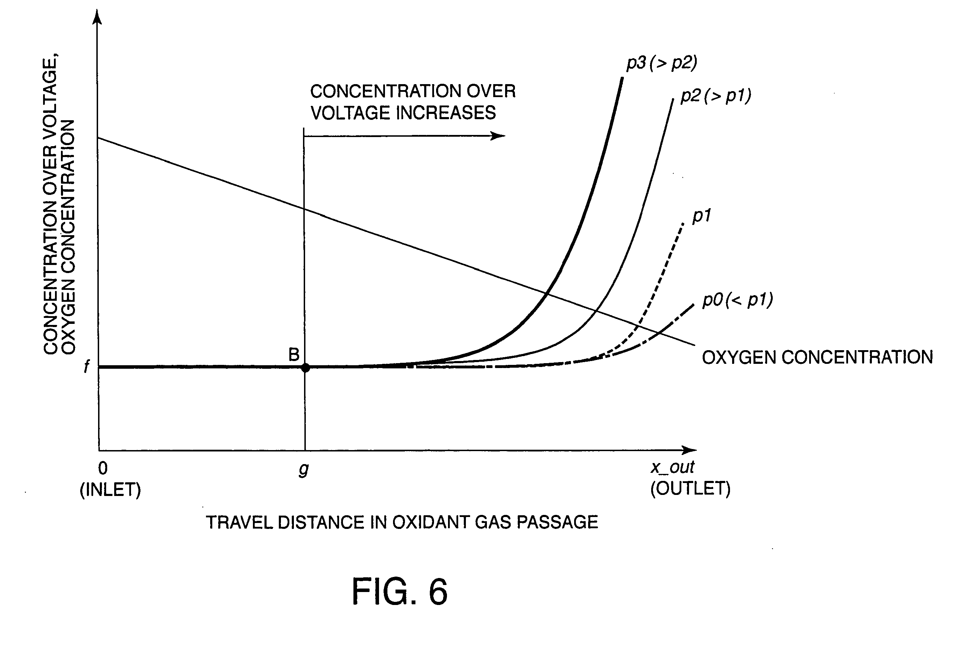

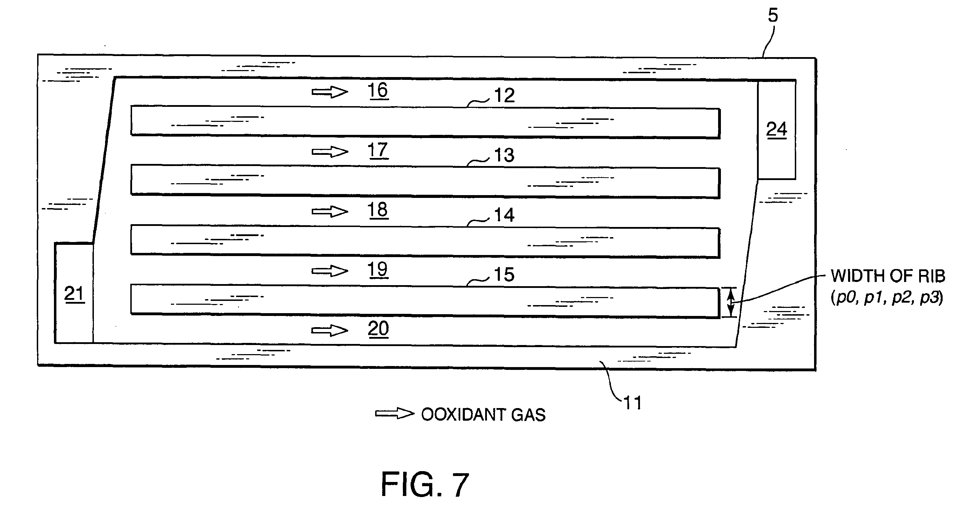

Referring to FIG. 6, when the width of the ribs 12-15 of the first separator 5 facing the cathode 3 varies under a constant power generation load, the concentration over-voltage also varies. Herein, it is assumed that the width of the ribs 12-15 of the first separator 5 is constant from an upstream end to a downstream end as shown in FIG. 7. The abscissa of the diagram in FIG. 6 represents a travel distance in the gas passage as in the case of the diagram in FIG. 5. The point of distance zero corresponds to the inlet of the gas passage, and the point of distance $x\_out$ corresponds to the outlet of the gas passage. As can be seen from the straight line in the figure, the oxygen concentration of the gas decreases as it flows down the gas passage from the inlet.

The inventors obtained the characteristic of the concentration over-voltage of a fuel cell shown in FIG. 6 through the following process. In a test piece fuel cell, voltage sensors are disposed at predetermined intervals in the oxidant gas passage from the inlet towards the outlet. In a sate where a constant power generation load is exerted on the fuel cell, voltages are measured by the voltage sensors. The voltages obtained in this way are regarded as the concentration over-voltage at each point in the oxidant gas passage, and are plotted on a graph having an abscissa representing a travel distance in the gas passage and an ordinate representing the concentration over-voltage. This process is repeated for various widths of the ribs $p0, p1, p2,$ and $p3$. Herein, the widths of the ribs $p0, p1, p2,$ and $p3$ have a relation $p0 < p1 < p2 < p3$.

As can be understood from FIG. 6, the concentration over-voltage depends greatly on the width of the ribs.

When the width of the ribs is equal to the smallest width $p0$ among the predetermined widths, the concentration over-voltage maintains a low value $f$ to a down stream portion of the gas passages and finally shows a small rise at a point near the outlet of the gas passages, as indicated by a dotted line in the figure. When the width of the ribs is increased sequentially to $p1, p2$ and $p3$, the rise in the concentration over-voltage takes place earlier, or in other words the point of the rise in the concentration over-voltage shifts further upstream. In this figure, when the width of the ribs is set equal to the value $p3$, the state where the concentration over-voltage does not show a rise lasts to a point B as shown by a thick solid line in the figure.

The point B in FIG. 6 is located at a travel distance $g$ which is 30 percent of the entire length $L$ of the ribs measured from the inlet of the oxidant gas passage. According to the investigation by the inventors, in a range within about 50 percent of the entire length $L$ of the ribs from the inlet of the gas passages, the concentration over-voltage stays within a tolerable limit.

The characteristic shown in FIG. 6 corresponds to a case where the ribs 12-15 have a constant width from the upstream end to the downstream end as shown in FIG. 7. In the separator 5 according to this invention, the width of the ribs 12-15 varies in a step-like fashion. As a result, the ribs 12-15 are divided into the ribs 12b-15b in the first region and the ribs 12c-15c in the second region. More specifically, the width $w2$ of the ribs 12c-15c in the second region, which corresponds to a downstream portion of the gas passages 16-20 with respect to the flow of the oxidant gas, is set equal to the predetermined value $p0$ while the width $w1$ of the ribs 12b-15b in the first region, which corresponds to an upstream portion of the gas passages 16-20 with respect to the flow of the oxidant gas, is set equal to the predetermined value $p2$ or $p3$, both of which are greater than the predetermined value $p0$. Further, by setting the first region within 50 percent of the entire length of the ribs 12-15, the ribs 12-15 can be constituted by the ribs 12b-15b in the first region and the ribs 12c-15c in the second region, which have different widths as shown in FIG. 3, without increasing the concentration over-voltage substantially in the downstream portion of the gas flow.

The width $w1$ of the ribs 12b-15b in the first region and the width $w2$ of the ribs 12c-15c in the second region should be determined such that the concentration over-voltage does not show a substantial rise in the entire region of the flow of the oxidant gas. By determining the outer dimensions of the first separator 5, therefore, the number of the ribs 12-15 are consequently determined.

The second separator 6 has same outer dimensions as the first separator and a similar construction as the first separator 5. By determining the width $w1$ of the ribs 12b-15b in the first region and the width $w2$ of the rib 12c-15c in the second region of the first separator 5, therefore, the width w3 of the ribs 32b-35b in the first region and the width w4 of the ribs 32c-35c in the second region of the second separator 6 are consequently determined. In short, the width $w3$ of the ribs 32b-35b in the first region of the second separator 6 is set equal to the width $w1$ of the ribs 12b-15b in the first region of the first separator 5 and the width w4 of the ribs 32c-35c in the second region of the second separator 6 is set equal to the width $w2$ of the rib 12c-15c in the second region of the first separator 5.

The fuel cell 1 shown in FIGs. 1-4 is a type of a model and comprises only four ribs, but in reality, the fuel cell may comprise a greater number of ribs. As described above, by determining the width of the ribs in consideration of a balance between the resistance over-voltage and the concentration over-voltage, an increase in the concentration over-voltage can be suppressed.

The fuel cell 1 cannot perform power generation without generating a heat associated with over-voltage or polarization. The electrolyte membrane 2 generates more heat as it becomes dry, because the resistance over-voltage increases as the electrolyte membrane 2 becomes dry. When the electrolyte membrane 2 dries and the heat generation amount increases, the electrolyte membrane 2 dries further, which makes the fuel cell 1 fall into a spiral of drying and heat generation, and as a result, the fuel cell 1 eventually stops generating power. This is the actual situation of dry-out.

To prevent dry-out of the fuel cell 1, the supplied gas should be saturated with water vapor. However, in a fuel cell power plant for a mobile object, it is not realistic to saturate the supplied gas with water vapor due to a limitation in the size of the plant. Accordingly, an upstream portion of the gas passages 16-20,. 36-40 is likely to suffer dry-out.

In the first separator 5 and the second separator 6 according to this invention, the width of the ribs 12-15 and the width of the ribs 32-35 are narrowed in a step-like fashion from the upstream portion to the down stream portion with respect to the flow of gas. In other words, the width of the gas passages 16-20 and the width of the gas passages 36-40 are widened from the upstream portion to the downstream portion in a step-like fashion. As a result, in each of the upstream portions of the gas passages 16-20 and the gas passages 36-40, the exposed surface areas of the electrodes 3, 4 to the gas passages 16-20 and the gas passages 36-40 are decreased respectively, and the moisture content of the electrolyte membrane 2 increases. As a result, the moisture content of the electrolyte membrane 2 is maintained at a higher level than that of the supplied gas. Narrowing the width of the ribs 12-15 and the ribs 32-35 from the upstream portion to the downstream portion in a step-like fashion therefore brings about a preferable effect in the prevention of dry-out.

In contrast, in the downstream portion of the gas passages 16-20 of the first separator 5 and the downstream portion of the gas passages 36-40 of the second separator 6, water vapor condenses due to over saturation and forms moisture beads. The moisture bead s thus formed block a flow of gas in the gas passages 16-20 or the gas passages 36-40 and may cause so-called flooding.

The downstream portion of the gas passages 16-20 and the downstream portion of the gas passages 36-40 are formed by widening the width of the upstream portion in a step-like fashion. This rapid increase in the width of the gas passages promotes a greater moisture bead sweeping force of the flow of gas than in the case of the prior art fuel cell in which the width of the gas passages is increased gradually. Accordingly, when moisture beads block the flow of gas in the gas passages 16-20 or the gas passages 36-40, the flow of gas pushes out the moisture beads from the gas passages 16-20 or the gas passages 36-40. Narrowing the width of the ribs 12-15 and the ribs 32-35 in a step-like fashion from the upstream side to the downstream side with respect to the flow of gas therefore brings about a preferable effect in terms of the prevention of flooding.

In the embodiment described above, the boundary between the first region and the second region is set at a travel distance corresponding to 30 percent of the entire length L of the ribs 12-15, 32-35 from the inlet of the gas passages 16-20, 36-40 with respect to the flow of gas. However, the preferable location of the boundary changes depending on the conditions. In the diagram of FIG. 5, the location of the point A shifts as the gradient of the line representing the sum of the moisture supply amount and the moisture generation amount varies. The location of the boundary should therefore be set in accordance with the specification of the fuel cell.

If the gas passages 16-20 or the gas passages 36-40 are not straight or if they are provided with a lateral communicating passage, it will bring about an unfavorable effect on the bead sweeping performance of the gas passages 16-20 or the gas passages 36-40. Further, if the width of the gas passages 16-20 or the gas passages 36-40 is set to be excessively large, the gas pressure cannot push out the moisture beads from the gas passages 16-20, 36-40 until moisture beads have built up to a great extent.

It is preferable that the first separator 5 and the second separator 6 have a simple construction. Considering the anti-dry-out performance, the drainage performance, the resistance over-voltage, and the concentration over-voltage, the number of variations in the width of each of the ribs 12-15 of the first separator 5 and the ribs 32-35 of the second separator 6, or in other words the number of rapid expansions in each of the gas passages 16-20 and the gas passages 36-40, should be set respectively to one so as to maximize the effect.

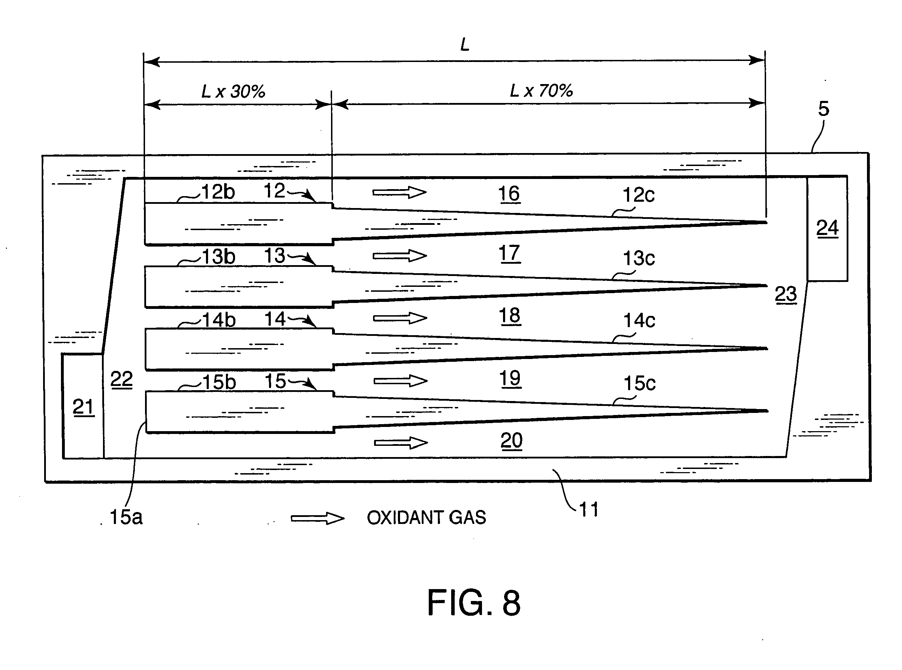

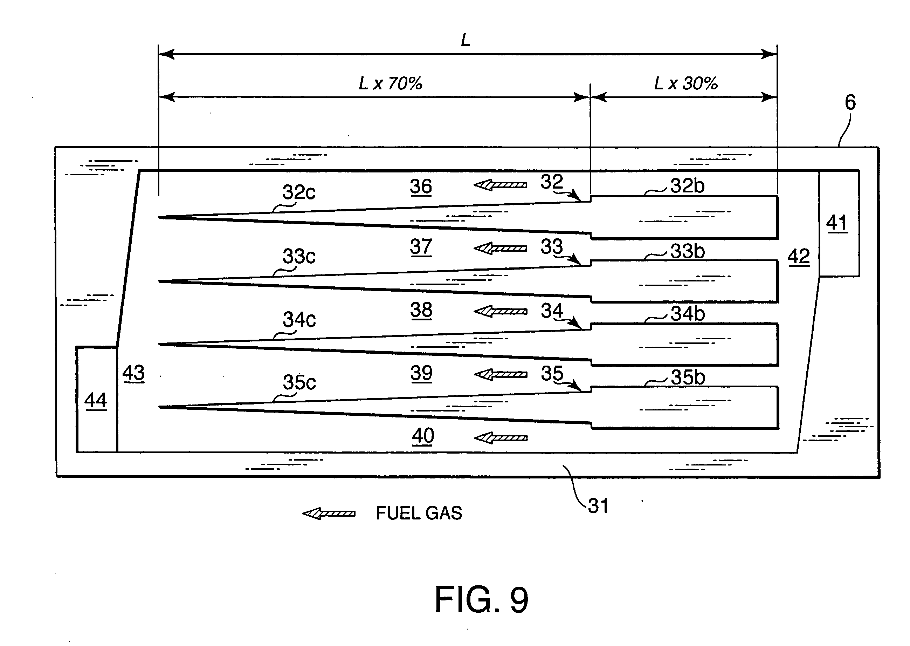

Referring to FIGs. 8 and 9, a second embodiment of this invention will be described.

In this embodiment, the width of the ribs 12c-15c in the second region of the first separator 5 is narrowed gradually towards the downstream side with respect to the flow of the oxidant gas. Accordingly, the width of the gas passages 16-20 in the second region increases gradually towards the downstream side. Similarly, the width of the ribs 32c-35c in the second region of the second separator 6 is narrowed gradually toward the downstream side with respect to the flow of the oxidant gas. Accordingly, the width of the gas passages 36-40 in the second region increases gradually towards the downstream side. The decrease rate of the width of the ribs 12c-15c, 32c-35c is not necessarily constant.

In this embodiment, the width of the gas passages 16-20, 36-40 widens gradually in the second region downstream of the boundary, and hence the bead sweeping force of the flow of gas is smaller than in the case of the first embodiment, but a preferable effect may be obtained in decreasing the concentration over-voltage, In this embodiment also, the moisture bead sweeping force of the flow of gas is enhanced owing to the rapid expansion provided in the gas passages 16-20, 36-40.

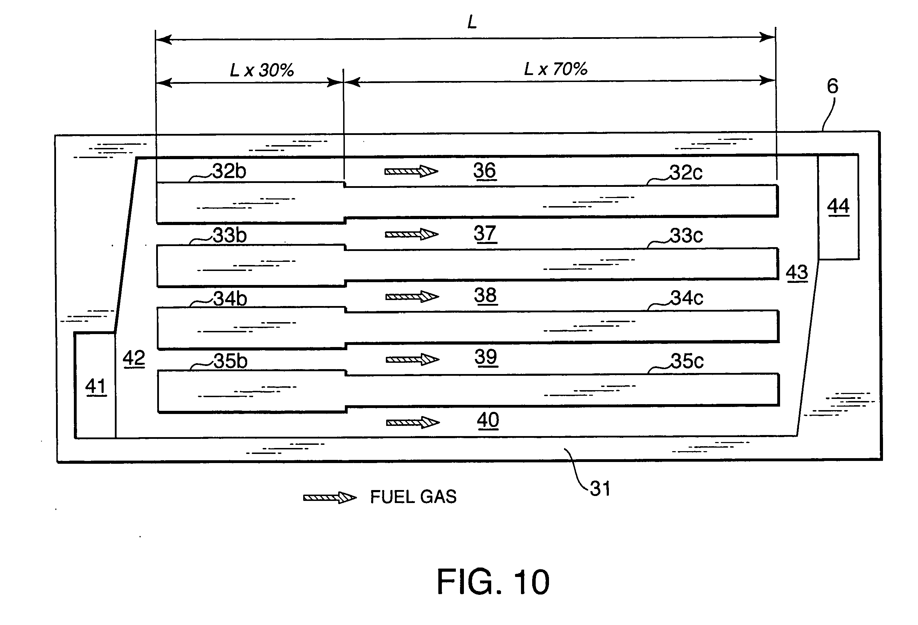

Referring to FIG. 10, a third embodiment of this invention will be described.

In the first embodiment, the first separator 5 in FIG. 3 and the second separator 6 in FIG. 4 are disposed face to face, and hence the flow direction of the gas passages 16-20 and that of the gas passages 36-40 are identical.

According to this embodiment, the flow direction of the gas in the gas passages 36-40 of the second separator 6 is set to be opposite to the flow direction of the gas in the gas passages 16-20 of the first separator 5. The first separator 5 is identical to that of the first embodiment.

In the second separator 6, the fuel gas is distributed from the supply manifold 41 formed in a position corresponding to the lower left corner of the second separator 6 in the figure to the gas passages 36-40 via the diffuser 42. Unused fuel gas and generated water vapor in the gas passages 36-40 are collected into the discharge manifold 44 via the collector 43. The discharge manifold 44 drains the unused fuel gas and the generated water vapor to the processing device provided outside the fuel cell 1.

According to the first embodiment, in which the flow directions of the fuel gas and the oxidant gas are identical, the ribs 12b-15b in the first region of the first separator 5 overlap the ribs 32b-35b in the first region of the second separator 6 while the ribs 12c-15c in the second region of the first separator 5 overlap the ribs 32c-35c in the second region of the second separator 6. In other words, the ribs having a smaller width overlap each other while the ribs having a larger width overlap each other. The fuel cell 1 is stacked on other fuel cells of the same construction and integrated into a fuel cell stack by stacking bolts. Observing bend or deflection of the separators 5, 6, it is understood that stress concentrates in a region where the ribs 12c-15c overlap the ribs 32c-35c in the second region.

According to this embodiment, a so-called countercurrent system in which the fuel gas and the oxidant gas are set to flow in opposite directions is employed, and hence the ribs 12b-15b in the first region of the first separator 5 overlap the ribs 32c-35c in the second region of the second separator 6 while the ribs 12c-15c in the second region of the first separator 5 overlap the ribs 32b-35b in the first region of the second separator 6 in a state where the separators 5, 6 are stacked in the fuel cell 1. According to this arrangement, stress is prevented from concentrating in a specific part of the fuel cell 1 when it is integrated into a fuel cell stack by the stacking bolts. This embodiment brings about a preferable effect in preventing the gas diffusion layer from breaking due to stress concentration.

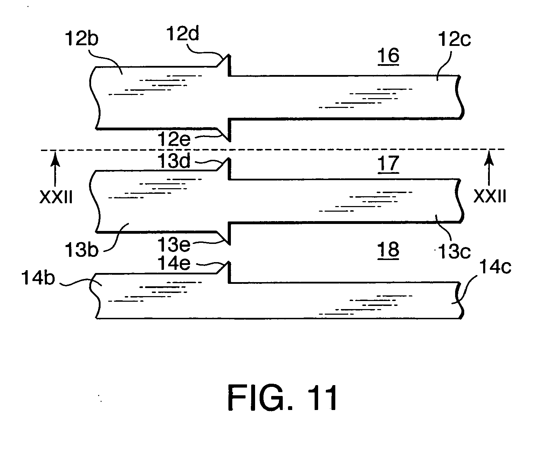

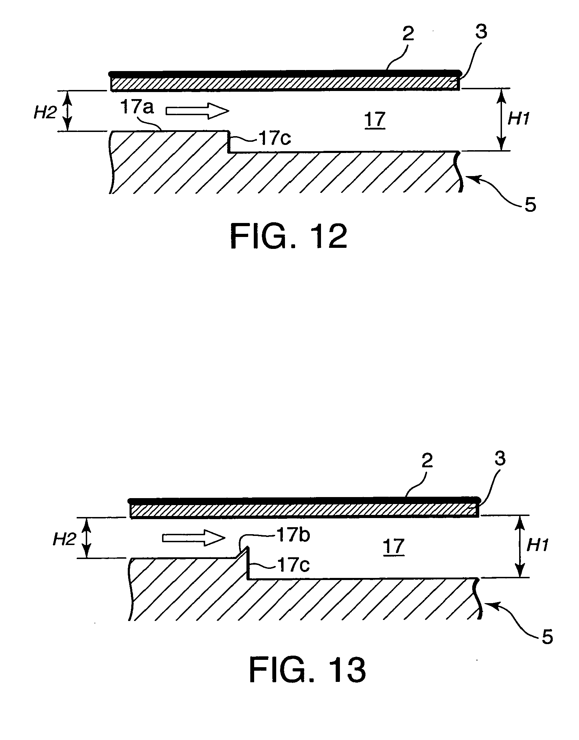

Referring to FIGs. 11 and 12, a fourth embodiment of this invention will be described.

Referring to FIG. 11, projections 12d-15d and projections 12e-15e projecting respectively into the gas passages 16-20 are formed at an end of the ribs 12b-15b in the first region which corresponds to the boundary to the ribs 12c-15c in the second region of the first separator 5. The projections 12d-15d and the projections 12e-15e function as an orifice which temporarily narrows a flow cross-section of the gas passages 16-20. According to this orifice effect brought about by the projections 12d-15d and 12e-15e, the gas velocity increases and the moisture bead sweeping force of the flow of gas is further enhanced.

Referring to FIG. 12, a depth of the gas passages 16-20 according to this embodiment is rapidly increased from a depth $H2$ to a depth $H1$ towards the downstream side via a step 17c formed in the boundary between the first region and the second region. This embodiment therefore varies the depth of the gas passages 16-20 and 36-40 as well as varying the width thereof. According to this embodiment, since the cross-sectional area of the gas passages 16-20 can be varied more greatly than in the case of the first - third embodiments, the moisture bead sweeping force of the flow of gas in the gas passages 16-20 is further increased.

The construction of the gas passages 16-20 described above may be applied to the gas passages 36-40 of the second separator 6.

Referring to FIG. 13, a fifth embodiment of this invention will be described.

This embodiment differs from the fourth embodiment in that the step 17c is further provided with an upward projection 17d. With respect to the other components, this embodiment is identical to the fourth embodiment.

The upward projection 17d is formed in addition to the projections 12d-15d and the projections 12e-15e of the fourth embodiment. In the fourth embodiment, the cross-sectional area of the gas passages 16-20 is narrowed from two directions whereas it is narrowed from three directions in this embodiment by providing the upward projections 17d. According to this embodiment, the orifice effect is further enhanced with respect to the fourth embodiment and the moisture bead sweeping force of the flow of gas in the gas passage 16-20 is also further enhanced.

The construction of the gas passages 16-20 described above may be applied to the gas passages 36-40 of the second separator 6.

The step 17c and the upward projection 17d shown in FIGs. 12 and 13 may be applied to the first - third embodiments.

The contents of Tokugan 2007-210726, with a filing date of August 13, 2007 in Japan, and Tokugan 2008-152614, with a filing date of June 11, 2008 in Japan, are hereby incorporated by reference.

Although the invention has been described above with reference to certain embodiments, the invention is not limited to the embodiments described above. Modifications and variations of the embodiments described above will occur to those skilled in the art, within the scope of the claims.

For example, in the embodiments described above, the width of the gas passages is varied by varying the width of the ribs, but it is also possible to form the ribs to have a constant width such that the rapid expansion is formed by laminating another component to the ribs having a constant width.

The embodiments of this invention in which an exclusive property or privilege is claimed are defined as follows:

**Claims**

1. A separator (5, 6) for a fuel cell (1), comprising:

   a gas passage (16-20, 36-40) facing an electrode (3, 4) of the fuel cell (1), the gas passage (16-20, 36-40) comprising a rapid expansion disposed therein to enlarge a width of the gas passage (16-20, 36-40) in a step-like fashion from an upstream side to a downstream side with respect to a flow of gas in the gas passage (16-20, 36-40).

2. The separator (5, 6) as defined in Claim 1, further comprising a rib (12-15, 32-35) which is in contact with the electrode (3, 4) and separates the gas passage (16-20, 36-40), wherein the rapid expansion is promoted by a variation of a width of the rib (12-15, 32-35).

3. The separator (5, 6) as defined in Claim 1 or Claim 2, wherein a width of the gas passage (16-20, 36-40) upstream of the rapid expansion and a width of the gas passage (16-20, 36-40) downstream of the rapid expansion are set respectively to be constant.

4. The separator (5, 6 ) as defined in any one of Claim 1 through Claim 3, wherein the gas passage (16-20, 36-40) upstream of the rapid expansion and the gas passage (16-20, 36-40) downstream of the rapid expansion are formed respectively in a straight linear shape, and a length of the gas passage (16-20, 36-40) upstream of the rapid expansion is set at a value that does not cause a gas flowing in the gas passage (16-20, 36-40) upstream of the rapid expansion to be saturated by moisture generated in the electrode (3, 4).

5. The separator (5, 6 ) as defined in Claim 4, wherein the value is determined such that a sum of moisture content of a gas supplied to the fuel cell (1) and the moisture generated in the electrode (3, 4) is within 1.3 times a water vapor saturation amount of the gas in the gas passage (16-20, 36-40) which is calculated from a cooling water temperature of the fuel cell (1).

6. The separator (5, 6 ) as defined in any one of Claim 1 through Claim 5, wherein a length of the gas passage (16-20, 36-40) upstream of the rapid expansion is set to be equal to or shorter than 50 percent of the entire length of the gas passage (16-20, 36-40).

7. The separator (5, 6 ) as defined in any one of Claim 1 through Claim 6, wherein the gas passage (16-20, 36-40) comprises only one rapid expansion.

8. The separator (5, 6 ) as defined in Claim 1 or Claim 2, wherein the width of the gas passage (16-20, 36-40) downstream of the rapid expansion is set to increase gradually towards the downstream side.

9. The separator (5, 6 ) as defined in any one of Claim 1 through Claim 8, wherein the gas passage (16-20, 36-40) further comprises an orifice disposed immediately upstream of the rapid expansion.

10. The separator (5, 6 ) as defined in any one of Claim 1 through Claim 9, wherein the rapid expansion comprises a step (17c) which rapidly increases a depth of the gas passage (16-20, 36-40).

11. A fuel cell (1) comprising:

an ion conducting electrolyte membrane (2);
a pair of electrodes (3, 4) gripping the electrolyte membrane (2);
a pair of separators (5, 6) each of which faces each of the electrodes (3, 4);
a gas passage (16-20, 36-40) formed in each separator (5, 6) to face the electrode (3, 4), the gas passage (16-20, 36-40) comprising a rapid expansion disposed therein to enlarge a width of the gas passage (16-20, 36-40) in a step-like fashion from an upstream side to a downstream side with respect to a flow of gas in the gas passage (16-20, 36-40).

12. The fuel cell (1) as defined in Claim 11, wherein the gas passage (16-20, 36-40) is separated by a rib (12-15, 32-35) which is in contact with the electrode (3, 4) and the rapid expansion is promoted by a variation of a width of the rib (12-15, 32-35).

13. The fuel cell (1) as defined in Claim 11 or Claim 12, wherein a width of the gas passage (16-20, 36-40) upstream of the rapid expansion and a width of the gas passage (16-20, 36-40) downstream of the rapid expansion are set respectively to be constant.

14. The fuel cell (1) as defined in any one of Claim 11 through Claim 13, wherein the gas passage (16-20, 36-40) upstream of the rapid expansion and the gas passage (16-20, 36-40) downstream of the rapid expansion are formed respectively in a straight linear shape, and a length of the gas passage (16-20, 36-40) upstream of the rapid expansion is set at a value that does not cause a gas flowing in the gas passage (16-20, 36-40) upstream of the rapid expansion to be saturated by moisture generated in the electrode (3, 4).

15. The fuel cell (1) as defined in Claim 14, wherein the value is determined such that a sum of moisture content of a gas supplied to the fuel cell (1) and the moisture generated in the electrode (3, 4) is within 1.3 times a water vapor saturation amount of the gas in the gas passage (16-20, 36-40), which is calculated from a cooling water temperature of the fuel cell (1).

16. The fuel cell (1) as defined in any one of Claim 11 through Claim 15, wherein a length of the gas passage (16-20, 36-40) upstream of the rapid expansion is set to be equal to or shorter than 50 percent of the entire length of the gas passage (16-20, 36-40).

17. The fuel cell (1) as defined in any one of Claim 11 through Claim 16, wherein the gas passage (16-20, 36-40) comprises only one rapid expansion.

18. The fuel cell (1) as defined in Claim 11 or Claim 12, wherein the width of the gas passage (16-20, 36-40) downstream of the rapid expansion is set to increase gradually towards the downstream side.

19. The fuel cell (1) as defined in any one of Claim 11 through Claim 18, wherein the gas passage (16-20, 36-40) further comprises an orifice disposed immediately upstream of the rapid expansion.

20. The fuel cell (1) as defined in any one of Claim 11 through Claim 19, wherein the rapid expansion comprises a step (17c) which rapidly increases a depth of the gas passage (16-20, 36-40).

FIG. 1

UNIT FUEL CELL

FIG. 2

FIG. 3

L

L x 70%

L x 30%

w1

w2

5

11

24

23

21

22

16

17

18

19

20

12 12b 12c

13 13b 13c

14 14b 14c

15 15b 15c

12a

13a

14a

15a

OXIDANT GAS

FUEL GAS

FIG. 4

FIG. 5

FIG. 6

FIG. 7

⇒ OOXIDANT GAS

WIDTH OF RIB
(p0, p1, p2, p3)

EP 2 026 393 A1

FIG. 8

EP 2 026 393 A1

EP 2 026 393 A1

FIG. 9

FIG. 10

EP 2 026 393 A1

12b    12d                    16        12c

12e

13d                    17

XXII                                        XXII

13b    13e                    18    13c

14b  14e                           14c

# FIG. 11

FIG. 12

FIG. 13

EP 2 026 393 A1

**EUROPEAN SEARCH REPORT**

**Application Number**

EP 08 01 4091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 08 138696 A (TOYOTA MOTOR CORP) 31 May 1996 (1996-05-31) * paragraphs [0018], [0019] * * figures 17,20 * | 1-20 | INV. H01M8/02 |
| X | JP 08 045520 A (MAZDA MOTOR) 16 February 1996 (1996-02-16) * abstract * * figures 5-7 * | 1-20 | |
| X | EP 1 265 303 A (MATSUSHITA ELECTRIC IND CO LTD [JP]) 11 December 2002 (2002-12-11) * paragraphs [0103] - [0109] * * figures 5,6 * | 1-20 | |
| P,X | WO 2008/019503 A (HYTEON INC [CA]; TANG HAO [CA]; BAI DINGRONG [CA]; ELKAIM DAVID [CA];) 21 February 2008 (2008-02-21) * paragraphs [0039] - [0046] * * figures 6a,6b,6c * | 1-20 | |
| P,X | US 2007/224474 A1 (YANG JEFFERSON YS [US] ET AL) 27 September 2007 (2007-09-27) * paragraphs [0028], [0031], [3234] * * figures 5,8 * | 1-20 | TECHNICAL FIELDS SEARCHED (IPC) H01M |
| P,X | JP 2007 265939 A (NGK INSULATORS LTD) 11 October 2007 (2007-10-11) * abstract * * figures 6,7 * | 1-20 | |

The present search report has been drawn up for all claims

| Place of search | Date of completion of the search | Examiner |
|---|---|---|
| The Hague | 10 October 2008 | Mercedes González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 08 01 4091

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2008

| Patent document cited in search report | | Publication date | Patent family member(s) | | Publication date |
|---|---|---|---|---|---|
| JP 8138696 | A | 31-05-1996 | NONE | | |
| JP 8045520 | A | 16-02-1996 | JP | 3459300 B2 | 20-10-2003 |
| EP 1265303 | A | 11-12-2002 | CN | 1416604 A | 07-05-2003 |
| | | | WO | 0167532 A1 | 13-09-2001 |
| | | | US | 2004197633 A1 | 07-10-2004 |
| WO 2008019503 | A | 21-02-2008 | NONE | | |
| US 2007224474 | A1 | 27-09-2007 | CA | 2579308 A1 | 24-09-2007 |
| | | | JP | 2007258168 A | 04-10-2007 |
| JP 2007265939 | A | 11-10-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004079245 A
- JP 2007210726 A
- JP 2008152614 A